# EUROPÄISCHE PATENTSCHRIFT

(11) **EP 1 399 336 B1**
(45) Veröffentlichungstag und Bekanntmachung des Hinweises auf die Patenterteilung: **29.06.2005**
(21) Anmeldenummer: 02719921.5
(22) Anmeldetag: 26.02.2002
(51) Int. Cl.: B60R 21/20

(54) **GEHÄUSE FÜR EIN AIRBAGMODUL**
HOUSING FOR AN AIRBAG MODULE
BOITIER DESTINE A UN MODULE DE COUSSIN GONFLABLE

(30) Priorität: 06.06.2001 DE 10127509
(43) Veröffentlichungstag der Anmeldung: 24.03.2004
(73) Patentinhaber: Volkswagen Aktiengesellschaft, 38436 Wolfsburg (DE)
(72) Erfinder: DAHMEN, Peter, 38126 Braunschweig (DE)
(74) Vertreter: Liebl, Thomas, Dipl.-Ing.
(86) Internationale Anmeldenummer: PCT/EP2002/002011
(87) Internationale Veröffentlichungsnummer: WO 2002/098712

(56) Entgegenhaltungen:
- DE-U- 29 803 233
- US-A- 5 873 598
- US-A- 5 988 677

## Beschreibung

Die Erfindung betrifft ein Gehäuse für ein Airbagmodul nach dem Oberbegriff des Anspruchs 1.

Derartige Gehäuse für ein Airbagmodul sind allgemein bekannt, z. B. in Verbindung mit Beifahrerairbagmodulen. Diese weisen in der Regel eine hintereinanderliegende Anordnung von Airbag und Gasgenerator in Austrittrichtung des Airbags auf, so dass ein relativ hochbauender Aufbau des Airbagmoduls gegeben ist. Diese hochbauenden Beifahrerairbagmodule grenzen die möglichen Einbaupositionen in einer Instrumententafel eines Kraftfahrzeugs ein, z. B. im frontscheibennahen Bereich. Deshalb ist es für einen kompakten Einbau der Airbagmodule oftmals wünschenswert, dass das Gehäuse relativ flachbauend ausgeführt ist. Dazu ist es aus der DE 200 08 543 U1 in Verbindung mit einem Seitenairbag, der im Dachrahmenbereich eines Kraftfahrzeugs untergebracht wird, bereits bekannt, einen Gasgenerator seitlich neben einem im nicht aktivierten Grundzustand zusammengefalteten Airbag anzuordnen. Der Airbag ist hier um den Gasgenerator herum angeordnet, so dass dieser über entsprechende Ausblasöffnungen am Gasgenerator direkt in den Airbag einbläst.

Nachteilig bei diesem Aufbau ist jedoch, dass hier z. B. im Rahmen der Wartung, der Reparatur oder des Austausches von einzelnen Bestandteilen und Bauteilen jedesmal das gesamte Modul ausgebaut werden muß.

Weiter ist aus der DE 199 11 682 A1 ein Gehäuse für ein Airbagmodul bekannt, das wenigstens einen Airbag und wenigstens einen entsprechend zugeordneten Gasgenerator aufweist. Der Gasgenerator ist in der nicht aktivierten Grundstellung des Airbagmoduls im Gehäuse zusammengefaltet seitlich neben dem Gasgenerator sowie hinter einer Abdeckeinrichtung angeordnet. Die Abdeckeinrichtung verschließt eine in einer Gehäusewand ausgebildete Airbag-Austrittöffnung in der nicht aktivierten Grundstellung, während sie im aktivierten Zustand des Airbagmoduls die Airbag-Austrittöffnung zur freien Entfaltung des Airbags freigibt. Der Airbag ist mit dem Gasgenerator über wenigstens einen Gaskanal verbunden.

Konkret ist das Gehäuse hier durch einen Lenkradnabenbereich eines Lenkrades gebildet, in das ein Lenkradairbagmodul eingesetzt ist, wobei der Gasgenerator in einem seitlichen Gehäusebereich angeordnet ist. Von einer gegenüberliegenden Randseite des Lenkradnabengehäuses ist in einem bei einer Geradeausfahrt obenliegenden Abschnitt eine die Abdeckeinrichtung bildende Airbagklappe ausgebildet. Vom am im Querschnitt gesehen gegenüberliegenden Ende angeordneten Gasgenerator ausgehend, ist ein Diffusorrohr als separates und den Gaskanal bildendes Bauteil entlang einer Nabengehäusebodenwand sowie anschließend entlang einer Nabengehäuseseitenwand nach oben in Richtung zu der Airbagklappe geführt. Dadurch wird im zwischen dem nach oben in Richtung zur Airbagklappe geführten Vertikatabschnitt des Diffusorrohres und dem Gasgenerator ein Freiraum ausgebildet, in dem in der nicht aktivierten Grundstellung der Airbag zusammengefaltet aufgenommen ist. Dieser Airbag ist mit einer Gewebelage um die im airbagklappennahen Diffusorrohrendabschnitt ausgebildete Gasausblasöffnung herum geführt, so dass bei einer Aktivierung des Airbagmoduls das Gas in den Airbag von der Seite her eingeblasen wird. Dadurch soll erreicht werden, dass der Airbag bei der Entfaltung nach und nach aus dem Nabengehäuse gezogen wird, wobei der Airbag sich zunächst seitlich nach oben vor oder hinter den bei Geradeausfahrt oben liegenden Abschnitt des Lenkradkranzes und dann erst in Richtung des Insassen entfalten kann. Ein derartiger Aufbau ist somit ersichtlich nur in Verbindung mit einem Lenkradairbag praktikabel, nicht jedoch z. B. in Verbindung mit Beifahrerairbags. Des weiteren wird mit einer derartigen Anordnung nachteilig der Aufblasvorgang insgesamt verzögert, so dass die Gefahr besteht, dass dieser Airbag ggf. nicht rechtzeitig in seine Gebrauchsposition überführt werden kann. Zudem ist auch hier der Airbag mit einer Gewebelage um den Gasgenerator und das Diffusorrohr herum geführt, so dass bei einer Wartung, einem Austausch oder dgl. stets ein Austausch des Gesamtmoduls erforderlich ist.

Aus der gattungsbildenden US 5,873,598 ist ein Gehäuse für ein Airbagmodul, insbesondere als Bestandteil einer tnsassenschutzvorrichtung für Kraftfahrzeuge, bekannt, mit wenigstens einem in einem Airbag-Aufnahmeraum des Gehäuses aufgenommenen Airbag, der in der nicht aktivierten Grundstellung des Airbagmoduls zusammengefaltet im Airbag-Aufnahmeraum hinter einer Abdeckeinrichtung angeordnet ist, die eine in einer Gehäusewand des Airbag-Aufnahmeraums ausgebildete und Bestandteil derselben bildende Airbag-Austrittöffnung in der nicht aktivierten Grundstellung verschließt und im aktivierten Zustand des Airbagmoduls die Airbag-Austrittöffnung zur freien Entfaltung des Airbags freigibt. Ferner ist wenigstens ein entsprechend zugeordneter Gasgenerator vorgesehen, der in einem Gasgenerator-Aufnahmeraum des Gehäuses aufgenommen ist, wobei der Airbag-Aufnahmeraum vom Gasgenerator-Aufnahmeraum durch eine gemeinsame Schottwand abgetrennt ist.

Konkret ist hierbei der Gasgenerator-Aufnahmeraum bezogen auf die Airbag-Austrittöffnungsebene unterhalb des Airbag-Aufnahmeraums angeordnet, wodurch ein relativ großbauender und wenig kompakter Aufbau erzielt wird. Der Airbag-Aufnahmeraum ist vom Gasgenerator-Aufnahmeraum durch die Schottwand als Zwischenwand abgetrennt, wobei die Schottwand im Querschnitt gesehen in einem seitlichen. Bereich so in einer Materialdoppelung gefaltet ist, dass an der Schottwand eine von diese in Richtung Airbag-Aufnahmeraum abstehende Trennwand ausgebildet wird. Diese Trennwand trennt den Airbag-Aufnahmeraum in einen als Gaskanal fungierenden Bereich und in einen Aufnahmebereich, in dem der Gassack zusammengefaltet aufgenommen ist. Über den Gasgenerator-Aufnahmeraum gelangt Gas durch entsprechende Durchtrittsöffnungen zuerst in den als Gasleitkanal ausgebildeten Kammerbereich des Airbag-Aufnahmegehäuses und anschließend in den Airbag, wobei ein seitliches Einblasen des Gases in den Airbag erfolgt. Mit einem derartigen Aufbau soll ein mittiges zentrales Einblasen in den Airbag vermieden werden. Insbesondere ist der Gasleitkanal hier auf einer im montierten Zustand dem Fahrzeuginsassen abgewandten Seite einer Airbagaustrittöffnung angeordnet, um zu erreichen, dass sich der Airbag im weiteren Verlauf des Aufblasvorgangs nicht sofort, sondern zeitlich verzögert in Richtung Fahrzeuginsassen aufbläst.

Aus der US 5,988,677 ist ein Airbagmodul bekannt, bei dem ein Diffusor eines Gasgenerators in einer Falte des zusammengefalteten Airbags aufgenommen wird, um zu erreichen, dass ein kontrolliertes Aufblasen des Airbags erzielt wird. Der Gasgenerator ist hier bezogen auf die Airbag-Austrittöffnungsebene unterhalb des zusammengefalteten Airbags angeordnet.

Aufgabe der Erfindung ist es, ein Gehäuse für ein Airbagmodul, insbesondere als Bestandteil einer Insassenschutzvorrichtung für Kraftfahrzeuge, zu schaffen, das flachbauend ist und zudem einen einfachen Austausch einzelner Bauteile des Airbagmoduls ermöglicht.

Diese Aufgabe wird gelöst mit den Merkmalen des Anspruchs 1.

Ein derartiger Aufbau des Airbag-Gehäuses weist eine Reihe von Vorteilen auf. So ist einerseits durch die Lage des Gasgenerators neben den zusammengefalteten Airbag ein flachbauendes, kompaktes Gehäuse ausbildbar, das eine Reihe von möglichen Einbaupositionen, z. B. auch in einem frontscheibennahen Bereich einer Instrumententafel, ermöglicht. Des weiteren ist hier der Gasgenerator vorteilhaft vom Airbag entkoppelt, so dass ein Austausch von z. B. dem Gasgenerator im Rahmen einer Reparatur, Wartung oder eines Austausches einfach möglich ist, ohne das hierzu auch der Airbag und damit das Gesamtmodul ausgebaut werden muß.

Dadurch, dass der Gaskanal wenigstens bereichsweise integraler Bestandteil der Gehäusewandung ist, wird eine vorteilhafte Funktionsintegration erzielt, da ohnehin vorzusehende Gehäusewandungen in einer Doppelfunktion gleichzeitig auch zur Ausbildung des Gaskanals verwendet werden können. Damit ist ein besonders kompakter Aufbau möglich. Ferner ist dadurch auch ein besonders einfacher und preiswerter Aufbau erzielbar. Dies noch um so mehr falls das Gehäuse z. B. als Strangpressprofil ausgebildet ist.

Mit der Gaseinleitung von unten her in Airbag-Austrittrichtung gesehen, wird zudem ein besonders schnelles und funktionssicheres Aufblasen des Airbags möglich, obwohl der Gasgenerator seitlich neben dem zusammengefalteten Airbag angeordnet ist.

Falls der Gaskanal mit einem Gaskanal-Endabschnitt als Gasverteiler säulenartig in einen im Querschnitt gesehen in etwa mittleren Bereich des Airbag-Aufnahmeraums und damit von unten her in etwa mittig in den zusammengefalteten Airbag hineinragt, wird eine vorteilhafte zentrale und mittige Gaseinleitung von unten her in den Airbag möglich, so dass der Airbag gleichmäßig mit konstantem, im Airbag gleichmäßig verteiltem Fülldruck schnell aufgeblasen werden kann. Dadurch wird die Funktionssicherheit eines Airbags insgesamt erhöht, da dieser mit einem derartigen konkreten Aufbau besonders schnell und gezielt in eine vorbestimmte Gebrauchsposition aufgeblasen werden kann.

Indem die wenigstens eine Gasausblasöffnung des Gasverteilers in Richtung auf die Abdeckeinrichtung und damit in Richtung auf die Airbagaustrittöffnung hin ausgerichtet ist, kann durch den Gasstrom zudem auch eine Abhebekraft auf die Abdeckeinrichtung ausgeübt werden, die zusätzlich zu der durch den sich aufblasenden Airbag auf die Abdeckeinrichtung ausgeübte Abhebekraft wirkt und dadurch eine besonders schnelle und funktionssichere Öffnung der Airbagaustrittöffnung durch Abheben oder Aufklappen der Abdeckeinrichtung bewirkt. Damit wird der Aufblasvorgang des gesamten Airbags insgesamt wesentlich funktionssicherer, so dass dieser schnell in der vorbestimmten Gebrauchsposition aufgeblasen werden kann.

Ein besonders kompakter und flachbauender Aufbau mit vorteilhaften Gehäusegeometrien ergibt sich, wenn das Gehäuse im Querschnitt in etwa rechteckförmig mit einem in etwa rechteckförmigen Airbag-Aufnahmeraum und einem in etwa rechteckförmigen Gasgenerator-Aufnahmeraum ausgebildet ist, die voneinander durch eine gemeinsame Schottwand abgetrennt sind. Durch diese gemeinsame Schottwand kann zudem auch der Materialaufwand in vorteilhafter Weise reduziert werden, da die Schottwand in einer Doppelfunktion sowohl als Gehäusewand für den Airbag-Aufnahmeraum als auch für den Gasgenerator-Aufnahmeraum dient.

Gemäß einer besonders bevorzugten Ausführungsform ist eine im Querschnitt gesehen der oberen Gehäusewand, in der die Airbagaustrittöffnung ausgebildet ist, gegenüberliegende untere Gasgenerator-Aufnahmeraumgehäusewand gegenüber einer im Querschnitt gesehen ebenfalls der oberen Gehäusewand gegenüberliegenden unteren Airbag-Aufnahmeraumgehäusewand nach unten versetzt und zur Ausbildung eines in etwa waagrecht verlaufenden Gaskanalabschnitts in etwa parallel zur Airbag-Aufnahmeraumseitenwand bis in etwa zum mittleren Airbag-Aufnahmeraumbereich geführt. An diesem Gaskanalabschnitt schließt sich nach oben in den Airbag-Aufnahmeraum hinein der säulenartige Gasverteiler in etwa vertikal verlaufend an. Der gesamte Gaskanal weist in einer solchen konkreten Ausführungsform in etwa eine L-Form auf. Mit einer derartigen konkreten Ausbildung ist ein besonders kompakter, flachbauender und funktionssicherer Aufbau möglich, der für viele Einbaupositionen geeignet ist.

Bevorzugt ist der Gasverteiler ebenfalls integraler Bestandteil der Gehäusewand und durch in Querschnitt gesehen entsprechend doppelwandig von dem der Abdeckeinrichtung gegenüberliegenden unteren Gehäusewandbereich ausgehend nach oben in den Airbag-Aufnahmeraum hineingeführt. Dies ist z. B. im Rahmen eines Strangpressverfahrens besonders einfach herzustellen und erfordert keinen zusätzlichen Bauteilaufwand.

Alternativ dazu kann der Gasverteiler aber auch als separates Bauteil ausgebildet sein, der im Bereich einer Gaskanalmündung im der Abdeckeinrichtung gegenüberliegenden unteren Gehäusewandbereich vorzugsweise gasdicht befestigt werden kann. Vorteilhaft kann hier der Gasverteiler Bestandteil eines Sets von Gasverteilern sein, die jeweils unterschiedliche Strömungsquerschnitte und/oder unterschiedliche Zahlen von Ausblasöffnungen und/oder unterschiedliche Ausblasöffnungsgeometrien aufweisen. Damit ist eine besonders individuelle Anpassung des Strömungsprofils an die jeweils vorherrschenden Aufblasbedingungen eines Airbags möglich.

Für den Fall, dass der Gasverteiler als separates Bauteil ausgebildet ist, kann der Gasverteiler-Gaskanal mündungsseitig entsprechende Rasteinrichtungen aufweisen, mit denen der Gasverteiler mit entsprechenden gehäusewandseitigen Gegenrasteinrichtungen lösbar verrastet und/oder verriegelt werden kann. Mittels derartiger Rasteinrichtungen und Gegenrasteinrichtungen ist eine besonders einfache Festlegung des als separates Bauteil ausgebildeten Gasverteilers im Airbag-Aufnahmeraum möglich.

Gemäß einer besonders bevorzugten konkreten Ausgestaltung erstreckt sich der Gasverteiler im Airbag-Aufnahmeraum mit einem Spaltabstand bis nahezu an die Abdeckeinrichtung hin und teilt der Gasverteiler den Airbag-Aufnahmeraum im Querschnitt gesehen in eine linke und rechte Airbag-Aufnahmeraumhälfte, in denen jeweils ein wesentlicher Teilbereich des gefalteten Airbags aufgenommen ist. Der Airbag ist mit vorzugsweise einer Gewebelage von der linken zur rechten Hälfte den Gasverteiler überspannend geführt. Mit derartigen geometrischen Verhältnissen ist ein besonders vorteilhaftes schnelles Aufblasen des Airbags mit hoher Funktionssicherheit möglich.

Grundsätzlich gibt es verschiedene Möglichkeiten, den Airbag im Airbag-Aufnahmeraum zu befestigen. Gemäß einer bevorzugten Ausführungsform ist der Airbag im Gehäusewandbereich, vorzugsweise an im Querschnitt gesehen gegenüberliegenden Randbereichen der Gehäusewand, vorzugsweise gasdicht, befestigt. Besonders vorteilhaft ist hier eine Festlegung der freien Airbagenden an einem unteren Gehäusewandbereich, z. B. über eine Verklippsung oder Verrastung. Vorteilhaft wird dadurch eine besonders einfache Faltung des Airbags seitlich neben dem säulenartigen Gasverteiler möglich.

Grundsätzlich ist es möglich, dass mehrere einzelne Gaskanäle in Längsrichtung des Gehäuses gesehen nebeneinander und ggf. beabstandet zueinander angeordnet sind. Gemäß eines besonders bevorzugten Ausgestaltung erstrecken sich der Gaskanal und/oder der Gasverteilers des Gaskanals im Längsschnitt gesehen jedoch wenigstens bereichsweise in Längsrichtung entlang des Gehäuses. Beispielsweise kann hier dann die Gasausblasöffnung schlitzförmig oder durch eine Vielzahl von nebeneinanderliegenden beabstandeten einzelnen Gasausblasöffnungslöchern gebildet sein. Mit einer derartigen Längserstreckung ist ein genügend großer Gasmengendurchsatz durch den Gaskanal in den Airbag hinein möglich, was vorteilhaft dazu beiträgt, den Airbag schnell in seiner vorbestimmten Gebrauchsposition aufzublasen.

Besonders vorteilhaft ist das Gehäuse an einer Stirnseite für einen Zugang in den Gasgenerator-Aufnahmeraum und in den Airbag-Aufnahmeraum offen ausgebildet, wobei der Gasgenerator-Aufnahmeraum und der Airbag-Aufnahmeraum nach der Montage des Airbagmoduls, d. h. des Gasgenerators und des Airbags, jeweils mit einem Deckelteil vorzugsweise gasdicht verschließbar sind. Dadurch ist eine besonders einfache Zugänglichkeit zu dem Airbag einerseits und dem Gasgenerator andererseits möglich, und zwar unabhängig voneinander. So kann beispielsweise unabhängig vom Gasgenerator der Airbag bzw. unabhängig vom Airbag der Gasgenerator gewartet, installiert oder ausgetauscht etc. werden, ohne dass das Gesamtmodul ausgebaut wird. Über die Deckelteile ist eine einfache Zugänglichkeit zu diesen Aufnahmeräumen sichergestellt. Vorteilhaft sind die Deckelteile hierzu mit dem Gehäuse verschraubt, wodurch eine besonders einfache Abnahme und damit ein besonders einfacher Zugang in die Aufnahmeräume hinein möglich ist. Grundsätzlich besteht dabei auch die Möglichkeit, für beide Aufnahmeräume einen durchgehenden Deckel zu verwenden, wobei dann für den Fall, dass z. B. nur ein Zugang in den Gasgenerator-Aufnahmeraum erwünscht ist, jedesmal auch der Zugang in den Airbag-Aufnahmeraum freigegeben ist.

Grundsätzlich gibt es weiterhin verschiedene Möglichkeiten, die Abdeckeinrichtung auszubilden. So kann die Abdeckeinrichtung z. B. durch eine oder mehrere Klappen gebildet sein, die im Austrittöffnungsrandbereich schwenkbar angelenkt sind. Ebenso kann die Abdeckeinrichtung durch einen Deckel gebildet sein, der am Austrittöffnungsrandbereich schwenkbar angelenkt und/oder lösbar verrastet ist. Dadurch wird in an sich bekannter Weise eine schnelle und funktionssichere Freigabe der Airbagaustrittöffnung erzielbar.

Bevorzugt erstreckt sich die Airbagaustrittöffnung nahezu über den gesamten oberen Gehäusewandbereich im Bereich des Airbag-Aufnahmeraums, wodurch ein besonders freies und ungehindertes Entfalten des Airbags in den Fahrzeuginnenraum hinein ermöglicht wird.

Die Erfindung wird nachfolgend anhand einer Zeichnung näher erläutert.

Es zeigen:
- Fig. 1: eine schematische, perspektivische Ansicht eines erfindungsgemäßen Gehäuses für ein Airbagmodul,
- Fig. 2: ein schematischer Querschnitt entlang der Linie A-A der Fig. 1 und
- Fig. 3: eine alternative Ausführungsform zu dem Aufbau nach Fig. 2

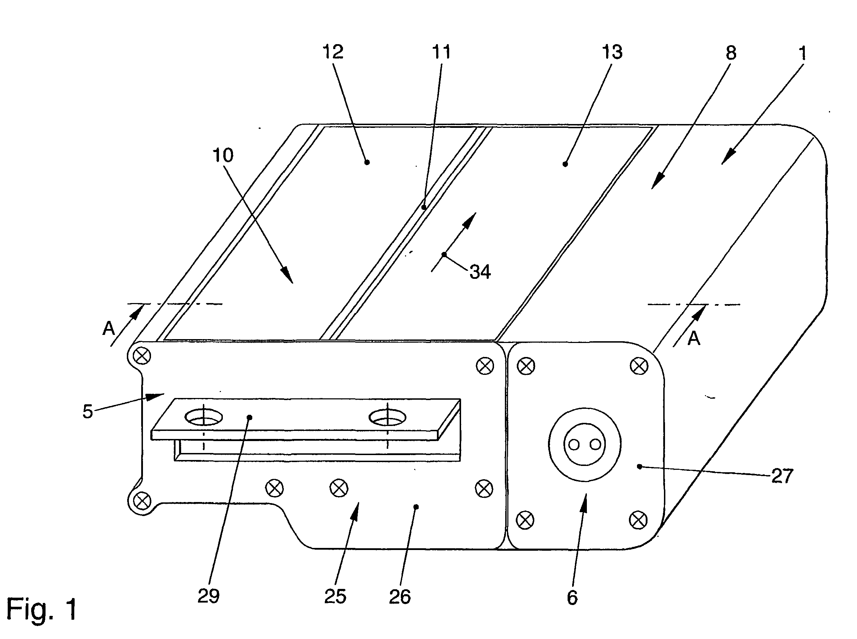

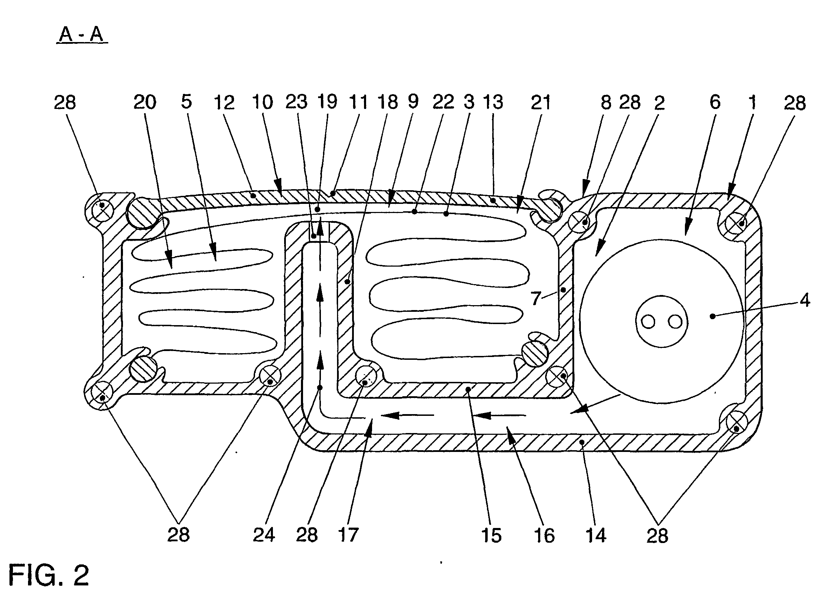

In der Fig. 1 ist schematisch und beispielhaft ein flaches Gehäuse 1 für ein Airbagmodul als Bestandteil einer Insassenschutzvorrichtung für ein Kraftfahrzeug im zusammengebauten Zustand gezeigt. Wie dies insbesondere aus der Fig. 2 ersichtlich ist, die einen schematischen Querschnitt entlang der Linie A-A der Fig. 1 zeigt, umfaßt das Airbagmodul 2 einen Airbag 3 sowie einen Gasgenerator 4. Der Airbag 3 ist im in der Fig. 1 gezeigten nicht aktivierten Zustand des Airbagmoduls 2 in einem Airbag-Aufnahmeraum 5 des Gehäuses 1 zusammengefaltet aufgenommen, das seitlich neben einem Gasgenerator-Aufnahmeraum 6 des Gehäuses 1 liegt, der vom Airbag-Aufnahmeraum 5 durch eine gemeinsame Schottwand 7 abgetrennt ist und in dem der Gasgenerator 4 aufgenommen ist.

Das flachbauende Gehäuse 1 ist im Querschnitt in etwa rechteckförmig ausgebildet, wobei auch der Airbag-Aufnahmeraum 5 und der Gasgenerator-Aufnahmeraum 6 einen in etwa rechteckförmigen Querschnitt aufweisen.

Den Fig. 1 und 2 kann zudem weiter entnommen werden, dass eine obere Gehäusewand 8 im Bereich des Airbag-Aufnahmeraums 5 eine sich nahezu über die gesamte Fläche des Airbag-Aufnahmeraums 5 erstreckende Airbagaustrittöffnung 9 aufweist, die mittels eines Deckels 10 als Abdeckeinrichtung verschlossen ist. Dieser Deckel 10 ist, wie dies insbesondere aus der Fig. 2 entnommen werden kann, im Randbereich der Airbagaustrittöffnung 9 vorzugsweise schwenkbar angelenkt und weist eine in Gehäuselängsrichtung durchgehende mittige Sollaufreißlinie 11 auf, so dass im Falle des sich aufblasenden Airbags der Deckel 10 entlang der Sollaufreißlinie 11 aufreißt und zwei Klappenteile 12, 13 ausbildet, die zur Freigabe der Airbagaustrittöffnung 9 um die airbagaustrittöffnungsrandseitigen Anlenkstellen schwenkbar sind.

Wie dies der Fig. 2 weiter entnommen werden kann, ist eine im Querschnitt gesehen der oberen Gehäusewand 8 und damit der Airbagaustrittöffnungsseite gegenüberliegende untere Gasgenerator-Aufnahmeraumgehäusewand 14 gegenüber einer in Querschnitt gesehen unteren Airbag-Aufnahmeraumgehäusewand 15 nach unten versetzt. Ferner ist diese untere Gasgenerator-Aufnahmeraumgehäusewand 14 zur Ausbildung eines in etwa waagerecht verlaufenden Gaskanalabschnitts 16 integraler Bestandteil der Gehäusewandung bildenden Gaskanals 17 in etwa parallel zur Airbag-Aufnahmeraumgehäusewand 15 bis in etwa zum mittleren Airbag-Aufnahmeraumbereich geführt. Von dort ausgehend schließt sich an diesen Gaskanalabschnitt 16 nach oben in den Airbag-Aufnahmeraum 5 hinein ein einen Gasverteiler 18 bildender Gaskanal-Endabschnitt in etwa vertikal verlaufend an, so dass dieser Gasverteiler 18 säulenartig in einen im Querschnitt der Fig. 2 gesehen in etwa mittleren Bereich des Airbag-Aufnahmeraums 5 und damit für eine zentrale Gaseinleitung von unten her in etwa mittig in den zusammengefalteten Airbag 3 hineinragt. Der Gasverteiler 18 ist ebenfalls integraler Bestandteil der Gehäusewand und dadurch im Querschnitt gesehen entsprechend doppelwandig von dem dem Deckel 10 gegenüberliegenden unteren Gehäusewandbereich ausgehend nach oben in den Airbag-Aufnahmeraum 5 hineingeführt.

Der Gasverteiler 18 erstreckt sich im Airbag-Aufnahmeraum mit einem Spaltabstand 19 bis nahezu an den Deckel 10 und teilt damit den Airbag-Aufnahmeraum 5 im Querschnitt der Fig. 2 gesehen in eine linke und rechte Airbag-Aufnahmeraumhälfte 20, 21, in denen jeweils ein wesentlicher Teilbereich des gefalteten Airbags 3 aufgenommen ist, wobei der Airbag mit einer Gewebelage 22 von der linken Airbag-Aufnahmeraumhälfte 20 zur rechten Airbag-Aufnahmeraumhälfte 21 den Gasverteiler 18 überspannend geführt ist.

Der Gaskanal 17 und damit auch der Gasverteiler 18 erstrecken sich in Gehäuselängsrichtung 34 gesehen wenigstens bereichsweise entlang des Gehäuses 1, was hier allerdings nicht dargestellt ist.

Der Gasverteiler 18 weist, wie dies aus der Fig. 2 ersichtlich ist, endseitig eine z. B. durch Fräsen hergestellte Gasausblasöffnung 23 auf, mit der ein Gasstrom in Richtung auf den Deckel 10 und damit in Richtung auf die Airbagaustrittöffnung 9 hin ausrichtbar ist, wie dies in der Darstellung der Fig. 2 mit dem Pfeilen 24 schematisch dargestellt ist.

Wie dies der Fig. 2 weiter entnommen werden kann, ist der Airbag 3 an im Querschnitt gesehen gegenüberliegenden Randbereichen der unteren Airbag-Aufnahmeraumgehäusewand gasdicht angebunden.

Das Gehäuse 1 ist wenigstens an einer Stirnseite 25 für einen Zugang in den Gasgenerator-Aufnahmeraum 6 und für einen Zugang in den Airbag-Aufnahmeraum 5 offen ausgebildet, wobei der Gasgenerator-Aufnahmeraum 6 und der Airbag-Aufnahmeraum 5 nach dem Einsetzen des Airbags 3 und des Gasgenerators 4 jeweils mit einem separaten Deckelteil 26, 27 vorzugsweise gasdicht verschließbar sind. Die Deckelteile 26, 27 können dabei mit dem Gehäuse 1 mehrfach verschraubt werden, wozu im Bereich der Gehäusewandungen entsprechende Befestigungsstellen 28 ggf. im Bereich einer wandseitigen Materialverdickung ausgebildet sind.

Das Gehäuse 1 ist vorzugsweise durch Strangpressen als Strangpressprofil hergestellt und kann z. B. im frontscheibennahen Bereich in der Instrumententafel eines Kraftfahrzeugs eingesetzt werden, was hier jedoch nicht dargestellt ist. Die Befestigung des Gehäuses 1 kann dabei über Befestigungsflansche 29 erfolgen, von denen in der Darstellung der Fig. 1 lediglich einer beispielhaft dargestellt ist.

Im Falle der Aktivierung des eingebauten Airbagmoduls 2 wird somit das im Gasgenerator 4 erzeugte Gas über den Gaskanal 17 und damit über den Gasverteiler 18 sowie über die Gasausblasöffnung 23 von unten her zentral in den Airbag 3 eingeblasen, wodurch dieser im Airbag-Aufnahmeraum 5 aufgeblasen wird und einen Druck auf den Deckel 7 ausübt, der entlang der Sollaufreißlinie 11 aufreißt. Dieser Druck auf den Deckel 10 wird noch zusätzlich durch den in Richtung auf den Deckel 10 gerichteten Gasstrom zusätzlich unterstützt.

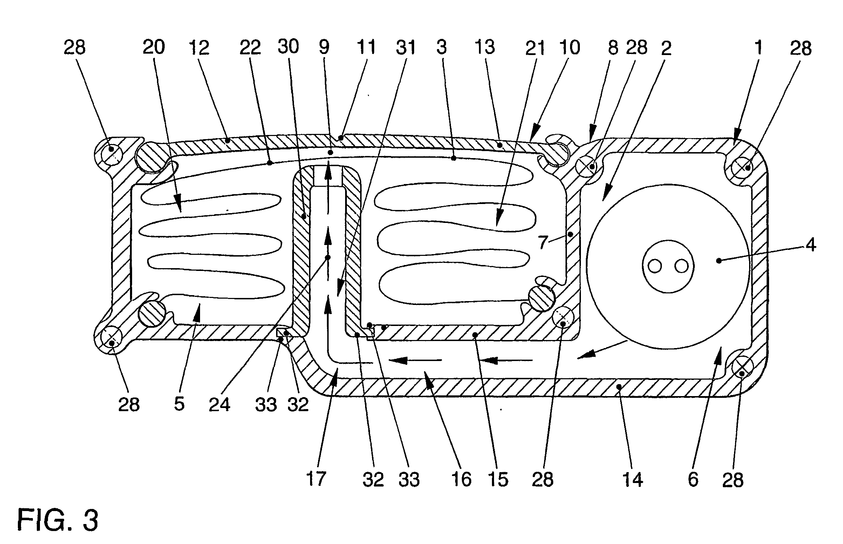

In der Fig. 3 ist eine alternative Ausführungsform zu der Fig. 2 dargestellt, bei der ein Gasverteiler 30 als separates Bauteil ausgebildet ist, der im Bereich eines Gaskanalmündung 31 in einem dem Deckel 10 gegenüberliegenden unteren Gasgenerator-Aufnahmeraumgehäusewandbereich 14 gasdicht verrastbar ist, wozu am Gasverteiler 30 Rastelemente 32 vorgesehen sind, die in entsprechende gehäusewandseitige Rastgegenelemente 33 einrastbar sind. Dadurch lassen sich z. B. Gasverteiler 30 mit unterschiedlichen Strömungsquerschnitten und unterschiedlichen Geometrien der Ausblasöffnung beliebig austauschen.

### BEZUGSZEICHENLISTE

- 1: Gehäuse
- 2: Airbagmodul
- 3: Airbag
- 4: Gasgenerator
- 5: Airbag-Aufnahmeraum
- 6: Gasgenerator-Aufnahmeraum
- 7: Schottwand
- 8: Obere Gehäusewand
- 9: Airbagaustrittöffnung
- 10: Deckel
- 11: Sollaufreißlinie
- 12: Klappenteil
- 13: Klappenteil
- 14: Gasgenerator-Aufnahmeraumgehäusewand, untere
- 15: Airbag-Aufnahmeraumgehäusewand, untere
- 16: Gaskanalabschnitt
- 17: Gaskanal
- 18: Gasverteiler
- 19: Spaltabstand
- 20: Linke Airbag-Aufnahmeraumhälfte
- 21: Rechte Airbag-Aufnahmeraumhälfte
- 22: Gewebelage
- 23: Gasausblasöffnung
- 24: Pfeile
- 25: Stirnseite
- 26: Deckelteil
- 27: Deckelteil
- 28: Befestigungsstellen
- 29: Befestigungsflansch
- 30: Gasverteiler
- 31: Gaskanalmündung
- 32: Rastelemente
- 33: Rastgegenelemente
- 34: Gehäuselängsrichtung

## Patentansprüche

1. Gehäuse (1) für ein Airbagmodul (2), insbesondere als Bestandteil einer Insassenschutzvorrichtung für Kraftfahrzeuge, mit wenigstens einem in einem Airbag-Aufnahmeraum (5) des Gehäuses (1) aufgenommenen Airbag (3), der in der nicht aktivierten Grundstellung des Airbagmoduls (2) zusammengefaltet im Airbag-Aufnahmeraum (6) hinter einer Abdeckeinrichtung (10) angeordnet ist, die eine in einer oberen Gehäusewand (8) des Airbag-Aufnahmeraums (5) ausgebildete und Bestandteil derselben bildende Airbag-Austrittöffnung (9) in der nicht aktivierten Grundstellung verschließt und im aktivierten Zustand des Airbagmoduls die Airbag-Austrittöffnung (9) zur freien Entfaltung des Airbags (3) freigibt, und mit wenigstens einem entsprechend zugeordneten Gasgenerator (4), der in einem bezogen auf die Airbag-Austrittöffnungsebene seitlich neben dem Airbag-Aufnahmeraum (5) liegenden und von diesem abgetrennten, Gasgenerator-Aufnahmeraum (6) des Gehäuses (1) aufgenommen ist, wobei der Airbag (3) mit dem Gasgenerator (4) über wenigstens einen Gaskanal (17), der wenigstens bereichsweise integraler Bestandteil der Gehäusewandung ist, gasleitend verbunden ist,
**dadurch gekennzeichnet,**
**dass** der Gaskanal (17) zur Ausbildung eines flach bauenden Gehäuses (1) einen vom Gasgenerator-Aufnahmeraum (6) ausgehenden, bezogen auf die Airbag-Austrittöffnungsebene in etwa waagrecht verlaufenden Gaskanalabschnitt (16) aufweist, der im Querschnitt durch das Gehäuse (1) gesehen auf der der Abdeckeinrichtung (10) gegenüberliegenden Seite unterhalb des Gasgenerators (4) sowie unterhalb des Airbags (3) und des Airbag-Aufnahmeraums (5) verläuft und in einen unteren Gehäusewandbereich (15) des Airbagaufnahmeraums (5) mündet für eine Gaseinleitung in den Airbag (3) von unten her in Airbag-Austrittrichtung.

2. Gehäuse nach Anspruch 1, **dadurch gekennzeichnet,**
**dass** der Gaskanal (17) mit einem einen Gasverteiler (18; 30) bildenden Gaskanal-Endabschnitt säulenartig in einen im Querschnitt gesehen in etwa mütleren Bereich des Airbag-Aufnahmeraums (5) und für eine zentrale Gaseinleitung von unten her in etwa mittig in den zusammengefalteten Airbag (3) hineinragt, und
**dass** der Gasverteiler (18; 30) wenigstens eine Gasausblasöffnung (23) für einen Gasstrom in den Airbag (3) hinein aufweist.

3. Gehäuse nach Anspruch 2, **dadurch gekennzeichnet, dass** die wenigstens eine Gasausblasöffnung (23) endseitig am Gasverteiler (18; 30) ausgebildet ist zum Lenken des Gasstroms in Richtung auf die Abdeckeinrichtung (10) und damit in Austrittrichtung des Airbags (3).

4. Gehäuse nach einem der Ansprüche 1 bis 3, **dadurch gekennzeichnet, dass** das Gehäuse (1) im Querschnitt in etwa rechteckförmig mit einem in etwa rechteckförmigen Airbag-Aufnahmeraum (5) und einem in etwa rechteckförmigen Gasgenerator-Aufnahmeraum (6) ausgebildet ist, die voneinander durch eine gemeinsame Schottwand (7) getrennt sind.

5. Gehäuse nach einem der Ansprüche 1 bis 4, **dadurch gekennzeichnet, dass** sich an den Gaskanalabschnitt (16) nach oben in den Airbag-Aufnahmeraum (5) hinein der säulenartige Gasverteiler (18; 30) in etwa vertikal verlaufend anschließt dergestalt,
dass der gesamte Gaskanal (17) in etwa eine L-Form aufweist.

6. Gehäuse nach einem der Ansprüche 1 bis 5, **dadurch gekennzeichnet, dass** der Gasverteiler (18) ebenfalls integraler Bestandteil der Gehäusewand ist und durch im Querschnitt gesehen entsprechend doppelwandig von dem der Abdeckeinrichtung (10) gegenüberliegenden unteren Gehäusewandbereich (15) ausgehend nach oben in den Airbag-Aufnahmeraum (5) hineingeführt ist.

7. Gehäuse nach einem der Ansprüche 1 bis 5, **dadurch gekennzeichnet, dass** der Gasverteiler (30) als separates Bauteil ausgebildet ist, der im Bereich einer Gaskanalmündung (31) im der Abdeckeinrichtung (10) gegenüberliegenden unteren Gehäusewandbereich (15) vorzugsweise gasdicht befestigbar ist.

8. Gehäuse nach Anspruch 7, **dadurch gekennzeichnet, dass** der Gasverteiler (30) Bestandteil eines Sets von Gasverteilem mit jeweils unterschiedlichen Ausblasöffnungszahlen und/oder -geometrie ist.

9. Gehäuse nach Anspruch 7 oder 8, **dadurch gekennzeichnet, dass** der Gasverteiler (30) gaskanalmündungsseitig entsprechende Rasteinrichtungen (32) aufweist zur lösbaren Verrastung mit entsprechenden gehäusewandseitigen Gegenrasteinrichtungen (33).

10. Gehäuse nach einem der Ansprüche 1 bis 9, **dadurch gekennzeichnet, dass** sich der Gasverteiler im Airbag-Aufnahmeraum (5) mit einem Spaltabstand (19) an die Abdeckeinrichtung (10) erstreckt und den Airbag-Aufnahmeraum (5) im Querschnitt gesehen in eine linke und rechte Airbag-Aufnahmeraumhälfte (20, 21) teilt, in denen jeweils ein wesentlicher Teilbereich des gefalteten Airbags (3) aufgenommen ist, wobei der Airbag (3) mit vorzugsweise einer Gewebelage (22) von der linken zur rechten Hälfte (20, 21) den Gasverteiler (18; 30) überspannend geführt ist.

11. Gehäuse nach einem der Ansprüche 1 bis 10, **dadurch gekennzeichnet, dass** der Airbag (3) an im Querschnitt gesehen gegenüberliegenden Randbereichen des unteren Gehäusewandbereichs (15) gasdicht befestigt ist.

12. Gehäuse nach einem der Ansprüche 1 bis 11, **dadurch gekennzeichnet, dass** sich der Gaskanal (17) und/oder der Gasverteiler (18) des Gaskanals (17) im Längsschnitt gesehen wenigstens bereichsweise in Längsrichtung entlang des Gehäuses (1) erstrecken.

13. Gehäuse nach einem der Ansprüche 1 bis 12, **dadurch gekennzeichnet,**
**dass** das Gehäuse (1) an einer Stirnseite für einen Zugang in den Gasgenerator- und Airbag-Aufnahmeraum (5, 6) offen ausgebildet ist, und
**dass** der Gasgenerator-Aufnahmeraum (6) und der Airbag-Aufnahmeraum (5) nach der Montage des Airbagmoduls (2) jeweils mit einem-Deckelteil (26, 27) vorzugsweise gasdicht verschließbar sind.

14. Gehäuse nach Anspruch 13, **dadurch gekennzeichnet, dass** die Deckelteile (26, 27) mit dem Gehäuse (1) verschraubbar sind.

15. Gehäuse nach einem der Ansprüche 1 bis 14, **dadurch gekennzeichnet, dass** die Abdeckeinrichtung durch einen Deckel (10) gebildet ist, der im Austrittöffnungsrandbereich festlegbar ist.

16. Gehäuse nach Anspruch 15, **dadurch gekennzeichnet, dass** der Deckel (10) im Austrittöffnungsrandbereich schwenkbar angelenkt und/oder lösbar verrastet ist.

17. Gehäuse nach einem der Ansprüche 1 bis 16, **dadurch gekennzeichnet, dass** sich die Airbagaustrittöffnung (9) nahezu über den gesamten oberen Gehäusewandbereich im Bereich des Airbag-Aufnahmeraums (5) erstreckt.

18. Gehäuse nach einem der Ansprüche 1 bis 17, **dadurch gekennzeichnet, dass** das Gehäuse (1) durch Strangpressen hergestellt ist.

19. Gehäuse nach einem der Ansprüche 1 bis 18, **dadurch gekennzeichnet, dass** im aktivierten Zustand des Airbagmoduls (2) das im Gasgenerator (4) erzeugte Gas über den Gaskanal (17) so von unten her in den Airbag (3) einleitbar ist, dass zusätzlich zu dem sich aufblasenden und auf die Abdeckeinrichtung (10) eine Abhebekraft ausübenden Airbag (3) auf die Abdeckeinrichtung (10) auch eine Abhebekraft durch den in Airbagaustrittrichtung auf die Abdeckeinrichtung (10) gerichteten Gasstrom aufbringbar ist.

20. Gehäuse nach einem der Ansprüche 1 bis 19, **dadurch gekennzeichnet, dass** das Airbagmodul (2) ein Beifahrerairbagmodul eines Kraftfahrzeugs ist, das im frontscheibennahen Bereich eingebaut ist.

## Claims

1. Housing (1) for an airbag module (2), in particular as an integral part of an occupant protection device for motor vehicles, with at least one airbag (3) which is received in an airbag reception space (5) of the housing (1) and which, folded together in the non-activated basic position of the airbag module (2) is arranged, in the airbag reception space (5), behind a covering means (10) which, in the non-activated basic position, closes an airbag exit orifice (9) formed in an upper housing wall (8) of the airbag reception space (5) and constituting an integral part of the said housing wall and, in the activated state of the airbag module, releases the airbag exit orifice (9) for the free deployment of the airbag (3), and with at least one correspondingly assigned gas generator (4) which is received in a gas-generator reception space (6) of the housing (1), the said gas-generator reception space lying with respect to the airbag exit orifice plane laterally next to the airbag reception space (5) and being separated from the latter, the airbag (3) being connected gas-conductively to the gas generator (4) via at least one gas duct (17) which, at least in regions, is an integral part of the housing wall, **characterized in that**, to form a housing (1) of flat build, the gas duct (17) has a gas-duct portion (16) which emanates from the gas-generator reception space (6) and runs approximately horizontally with respect to the airbag exit orifice plane and which, as seen in the cross section through the housing (1), runs, on the side located opposite the covering means (10), below the gas generator (4) and below the airbag (3) and the airbag reception space (5) and issues into a lower housing-wall region (15) of the airbag reception space (5) for an introduction of gas into the airbag (3) from below in the airbag exit direction.

2. Housing according to Claim 1, **characterized in that** the gas duct (17) projects in a column-like manner, with a gas-duct end portion forming a gas distributor (18; 30), into an approximately middle region of the airbag reception space (5), as seen in cross section, and, for a central introduction of gas from below, approximately centrally into the folded-together airbag (3), and **in that** the gas distributor (18; 30) has at least one gas blow-out orifice (23) for a gas stream into the airbag (3).

3. Housing according to Claim 2, **characterized in that** the at least one gas blow-out orifice (23) is formed on the gas distributor (18; 30) on the end face for steering the gas stream in the direction of the covering means (10) and consequently in the exit direction of the airbag (3).

4. Housing according to one of Claims 1 to 3, **characterized in that** the housing (1) is designed, in cross section, approximately rectangularly with an approximately rectangular airbag reception space (5) and with an approximately rectangular gas-generator reception space (6) which are separated from one another by means of a common partition (7).

5. Housing according to one of Claims 1 to 4, **characterized in that** the column-like gas distributor (18; 30), running approximately vertically, follows the gas-duct portion (6) upwards into the airbag reception space (5), in such a way that the entire gas duct (17) is approximately L-shaped.

6. Housing according to one of Claims 1 to 5, **characterized in that** the gas distributor (18) is likewise an integral part of the housing wall and is led, correspondingly double-walled, as seen in cross section, from the lower housing-wall region (15) located opposite the covering means (10) upwards into the airbag reception space (5).

7. Housing according to one of Claims 1 to 5, **characterized in that** the gas distributor (30) is designed as a separate component which can be fastened, preferably gas-like, in the region of a gas-duct issue (31), in the lower housing-wall region (15) located opposite the covering means (10).

8. Housing according to Claim 7, **characterized in that** the gas distributor (30) is an integral part of a set of gas distributors having in each case different numbers and/or geometries of blow-out orifices.

9. Housing according to Claim 7 or 8, **characterized in that** the gas distributor (30) has appropriate latching means (52) on the gas-duct issue side for releasable latching together with corresponding counterlatching means (33) located on the housing-wall side.

10. Housing according to one of Claims 1 to 9, **characterized in that** the gas distributor extends in the airbag reception space (5) towards the covering means (10) with a gap clearance (19) and, as seen in cross section, divides the airbag reception space (5) into a left-hand and right-hand airbag reception space half (20, 21), each of which receives a substantial part-region of the folded airbag (3), the airbag (3) being guided so as to span the gas distributor (18; 30) with preferably one fabric ply (22) from the left-hand to the right-hand half (20, 21).

11. Housing according to one of Claims 1 to 10, **characterized in that** the airbag (3) is fastened, gas-tight, to edge regions of the lower housing-wall region (15) which, as seen in cross section, are located opposite one another.

12. Housing according to one of Claims 1 to 11, **characterized in that**, as seen in longitudinal section, the gas duct (17) and/or the gas distributor (18) of the gas duct (17) extend/extends, at least in regions, along the housing (1) in the longitudinal direction.

13. Housing according to one of Claims 1 to 12, **characterized in that** the housing (1) is designed to be open on one end face for access into the gas-generator and the airbag reception spaces (5, 6), and **in that**, after the mounting of the airbag module (2), the gas-generator reception space (6) and the airbag reception space (5) can be closed, preferably gas-tight, in each case by means of a lid part (26, 27).

14. Housing according to Claim 13, **characterized in that** the lid parts (26, 27) can be screwed together with the housing (1).

15. Housing according to one of Claims 1 to 14, **characterized in that** the covering means is formed by a lid (10) which can be secured in the exit-orifice edge region.

16. Housing according to Claim 15, **characterized in that** the lid (10) is pivotably articulated and/or releasably latched in the exit-orifice edge region.

17. Housing according to one of Claims 1 to 16, **characterized in that** the airbag exit orifice (9) extends virtually over the entire upper housing-wall region in the region of the airbag reception space (5).

18. Housing according to one of Claims 1 to 17, **characterized in that** the housing (1) is produced by extrusion.

19. Housing according to one of Claims 1 to 18, **characterized in that**, in the activated state of the airbag module (2), the gas generated in the gas generator (4) can be introduced from below into the airbag (3) via the gas duct (17) in such a way that, in addition to the inflating airbag (3) exerting a lifting-off force on the covering means (10), a lifting-off force can also be applied to the covering means (10) by the gas stream directed onto the covering means (10) in the airbag exit direction.

20. Housing according to one of Claims 1 to 19, **characterized in that** the airbag module (2) is a front-seat passenger airbag module of a motor vehicle which is installed in the region of the front windscreen.

## Revendications

1. Boîtier (1) pour un module (2) d'airbag, notamment comme élément d'un dispositif de protection des occupants de véhicules automobiles, avec au moins un airbag (3) qui est reçu dans un espace (5) récepteur d'airbag du boîtier (1) et qui, dans la position de base non activée du module (2) d'airbag, est disposé replié dans l'espace (5) récepteur d'airbag derrière un moyen de recouvrement (10) qui, dans la position de base non activée, ferme une ouverture (9) de sortie d'airbag configurée dans une paroi supérieure (8) de boîtier de l'espace (5) récepteur d'airbag et faisant partie de cette paroi, et moyen qui, dans l'état activé du module d'airbag, dégage l'ouverture (9) de sortie d'airbag afin de déplier librement l'airbag (3), et avec au moins un générateur de gaz (4) associé d'une manière correspondante qui est reçu dans un espace (6) récepteur de générateur de gaz du boîtier (1), espace qui est situé, par rapport au plan de l'ouverture de sortie d'airbag, sur le côté de l'espace (5) récepteur d'airbag et est séparé de ce dernier, sachant que l'airbag (3) est relié en conduction de gaz au générateur de gaz (4) par l'intermédiaire d'au moins un conduit de gaz (17) qui fait au moins pour région partie intégrante de la paroi du boîtier,
**caractérisé en ce que** le conduit de gaz (17), afin de former un boîtier (1) de construction plate, présente un tronçon (16) de conduit de gaz partant de l'espace (6) récepteur de générateur de gaz et s'étendant environ horizontalement par rapport au plan de l'ouverture de sortie d'airbag, tronçon qui, considéré en coupe transversale à travers le boîtier (1), s'étend sur le côté opposé au moyen de recouvrement (10) en dessous du générateur de gaz (4) ainsi qu'en dessous de l'airbag (3) et de l'espace (5) récepteur d'airbag, et qui débouche dans une région inférieure (15) de paroi de boîtier de l'espace (5) récepteur d'airbag afin d'introduire du gaz dans l'airbag (3) par le bas dans la direction de sortie de l'airbag.

2. Boîtier selon la revendication 1, **caractérisé en ce que** le conduit de gaz (17), par un tronçon terminal de conduit de gaz formant un distributeur de gaz (18 ; 30), pénètre à la manière d'une colonne dans une région approximativement centrale, considéré en coupe transversale, de l'espace (5) récepteur d'airbag et, afin d'introduire le gaz centralement par le bas, environ centralement dans l'airbag replié (3), et **en ce que** le distributeur de gaz (18 ; 30) présente au moins une ouverture (23) d'expulsion de gaz pour envoyer un flux de gaz à l'intérieur de l'airbag (3).

3. Boîtier selon la revendication 2, **caractérisé en ce que** l'ouverture (23) d'expulsion de gaz au moins unique est configurée terminalement sur le distributeur de gaz (18 ; 30) afin de diriger le flux de gaz en direction du moyen de recouvrement (10) et donc dans la direction de sortie de l'airbag (3).

4. Boîtier selon l'une quelconque des revendications 1 à 3, **caractérisé en ce que** le boîtier (1) est réalisé approximativement rectangulaire en coupe transversale, avec un espace (5) récepteur d'airbag approximativement rectangulaire et un espace (6) récepteur de générateur de gaz approximativement rectangulaire, qui sont séparés l'un de l'autre par une paroi séparatrice commune (7).

5. Boîtier selon l'une quelconque des revendications 1 à 4, **caractérisé en ce que** le distributeur de gaz (18 ; 30) du genre colonne se raccorde au tronçon (16) de conduit de gaz vers le haut à l'intérieur de l'espace (5) récepteur d'airbag, en s'étendant approximativement verticalement, de telle sorte que l'ensemble du conduit de gaz (17) présente approximativement une forme de L.

6. Boîtier selon l'une quelconque des revendications 1 à 5, **caractérisé en ce que** le distributeur de gaz (18) fait lui aussi partie intégrante de la paroi du boîtier et, considéré en coupe transversale, en étant réalisé à double paroi d'une manière correspondante, est dirigé vers le haut à l'intérieur de l'espace (5) récepteur d'airbag en partant de la région inférieure (15) de paroi de boîtier qui est opposée au moyen de recouvrement (10).

7. Boîtier selon l'une quelconque des revendications 1 à 5, **caractérisé en ce que** le distributeur de gaz (30) est réalisé sous forme d'élément séparé, qui peut être fixé, dans la région d'une embouchure (31) de conduit de gaz, de préférence en étanchéité au gaz dans la région inférieure (15) de paroi de boîtier qui est opposée au moyen de recouvrement (10).

8. Boîtier selon la revendication 7, **caractérisé en ce que** le distributeur de gaz (30) fait partie d'un jeu de distributeurs de gaz ayant respectivement des ouvertures d'expulsion de gaz en un nombre différent et/ou de géométrie différente.

9. Boîtier selon la revendication 7 ou 8, **caractérisé en ce que** le distributeur de gaz (30) présente, du côté de l'embouchure de conduit de gaz, des moyens d'enclenchement correspondants (32) pour l'enclenchement amovible avec des moyens d'enclenchement complémentaires correspondants (33) de la paroi de boîtier.

10. Boîtier selon l'une quelconque des revendications 1 à 9, **caractérisé en ce que** le distributeur de gaz s'étend dans l'espace (5) récepteur d'airbag jusqu'à une distance interstitielle (19) du moyen de recouvrement (10) et divise l'espace (5) récepteur d'airbag, considéré en coupe transversale, en des moitiés (20, 21) gauche et droite d'espace récepteur d'airbag dans chacune desquelles est reçue une partie importante de l'airbag replié (3), sachant que l'airbag (3) est dirigé en recouvrant le distributeur de gaz (18 ; 30) de préférence par une couche de tissu (22) de la moitié gauche (20) vers la moitié droite (21).

11. Boîtier selon l'une quelconque des revendications 1 à 10, **caractérisé en ce que** l'airbag (3) est fixé en étanchéité au gaz sur des régions de bords opposées, considéré en coupe transversale, de la région inférieure (15) de paroi de boîtier.

12. Boîtier selon l'une quelconque des revendications 1 à 11, **caractérisé en ce que** le conduit de gaz (17) et/ou le distributeur de gaz (18) du conduit de gaz (17) s'étendent, considéré en coupe longitudinale, au moins pour région en direction longitudinale le long du boîtier (1).

13. Boîtier selon l'une quelconque des revendications 1 à 12, **caractérisé en ce que** le boîtier (1) est réalisé ouvert sur son côté frontal afin d'accéder dans l'espace (5) récepteur d'airbag et l'espace (6) récepteur de générateur de gaz, et **en ce que** l'espace (6) récepteur de générateur de gaz et l'espace (5) récepteur d'airbag peuvent être, à la suite du montage du module (2) d'airbag, fermés de préférence en étanchéité au gaz par un élément respectif (26, 27) formant couvercle.

14. Boîtier selon la revendication 13, **caractérisé en ce que** les éléments formant couvercles (26, 27) peuvent être vissés sur le boîtier (1).

15. Boîtier selon l'une de quelconque s revendications 1 à 14, **caractérisé en ce que** le moyen de recouvrement est formé par un couvercle (10) qui peut être fixé dans la région du bord de l'ouverture de sortie.

16. Boîtier selon la revendication 15, **caractérisé en ce que** le couvercle (10) est articulé à pivotement et/ou est enclenché de manière amovible dans la région du bord de l'ouverture de sortie.

17. Boîtier selon l'une quelconque des revendications 1 à 16, **caractérisé en ce que** l'ouverture (9) de sortie d'airbag s'étend sur pratiquement toute la région supérieure de paroi de boîtier dans la région de l'espace (5) récepteur d'airbag.

18. Boîtier selon l'une quelconque des revendications 1 à 17, **caractérisé en ce que** le boîtier (1) est fabriqué par extrusion.

19. Boîtier selon l'une quelconque des revendications 1 à 18, **caractérisé en ce que**, dans l'état activé du module (2) d'airbag, le gaz produit dans le générateur de gaz (4) peut être, par l'intermédiaire du conduit de gaz (17), introduit par le bas dans l'airbag (3) de telle sorte que, en plus de l'airbag (3) qui se gonfle et exerce une force de soulèvement sur le moyen de recouvrement (10), on peut également appliquer une force de soulèvement sur le moyen de recouvrement (10) par le flux de gaz dirigé dans la direction de sortie de l'airbag sur le moyen de recouvrement (10).

20. Boîtier selon l'une quelconque des revendications 1 à 19, **caractérisé en ce que** le module (2) d'airbag est un module d'airbag de passager avant d'un véhicule automobile, qui est installé dans la région proche du pare-brise.
